Europäisches Patentamt

European Patent Office

Office européen des brevets

(19)

(11) Numéro de publication: **0 1 1 7 1 9 8**
**B1**

(12) **FASCICULE DE BREVET EUROPEEN**

(45) Date de publication du fascicule du brevet:
08.10.86

(51) Int. Cl.⁴: **H 02 M 3/335**

(21) Numéro de dépôt: **84400296.4**

(22) Date de dépôt: **14.02.84**

(54) Procédé de commutation de l'alimentation électrique entre deux circuits de charge indépendants.

(30) Priorité: **22.02.83 FR 8302838**

(43) Date de publication de la demande:
**29.08.84 Bulletin 84/35**

(45) Mention de la délivrance du brevet:
**08.10.86 Bulletin 86/41**

(84) Etats contractants désignés:
**BE DE GB IT NL**

(56) Documents cités:
**DE - A - 2 648 309**
**DE - B - 1 253 754**
**US - A - 3 569 818**
**US - A - 4 176 304**

(73) Titulaire: **GENERAL EQUIPMENT MEDICAL S.A., rue Marie Curie, B-4431 Loncin (BE)**

(72) Inventeur: **Wathelet, Daniel, THOMSON-CSF SCPI 173, bld Haussmann, F-75379 Paris Cedex 08 (FR)**

(74) Mandataire: **Grynwald, Albert et al, THOMSON-CSF SCPI 19, avenue de Messine, F-75008 Paris (FR)**

## Description

L'invention concerne un procédé de commutation de l'alimentation électrique entre deux circuits de charge indépendants s'appliquant notamment à des tubes à rayons X utilisés en radiologie moderne.

Les applications radiologiques les plus connues, notamment dans le domaine médical, sont la radioscopie et la radiographie. Dans ces deux applications un objet ou un patient est soumis au rayonnement d'un tube à rayons X et l'on relève l'image de l'atténuation du faisceau de rayons après qu'il ait traversé l'objet. En radioscopie, le rayonnement X traverse l'objet pendant des périodes longues. Dans le domaine médicale, la puissance de ce rayonnement est faible de manière à ne pas soumettre le patient à une irradiation prolongée néfaste. En radiographie, la puissance du rayonnement X est élevée mais sa durée est brève. Cette manière de faire a pour effet d'impressionner efficacement la plaque photographique qui relève l'image tout en en soumettant pas l'objet ou le patient à une irradiation trop forte du fait de la brièveté de cette impulsion unique.

Les tubes à rayons Y capables de rayonner au choix l'un de ces deux rayonnements comportent comme tronc commun une structure complète unique comportant notamment une anode, des dispositifs de focalisation, des dispositifs de commande, et une enveloppe mécanique de tube. Des circuits de commutation agissent sur un ensemble cathode de ce tube. On sélectionne ainsi, suivant le besoin, une cathode émettant peu ou beaucoup d'électrons pour provoquer respectivement lors du choc de ces électrons sur l'anode une émission faible ou forte de rayons X. Le dispositif de commande du tube comporte généralement des moyens pour annuler rapidement la polarisation de cathode dans une application de radiographie.

Pratiquement, l'ensemble cathode du tube comporte deux cathodes. Ces cathodes comportant couramment des filaments, sont échauffées en chauffage direct par le passage d'un courant électrique de chauffage dans ces filaments. Dans le but de limiter les connexions électriques devant traverser l'enveloppe du tube, il est connu de relier ces filementes à un point commun servant par ailleurs à apliquer la tension de polarisation de cathode. Cet ensemble de cathodes comporte ainsi trois bornes de connexions au minimum. De cette façon, la tension de polarisation est appliquée à la fois sur chacune des deux cathodes de l'ensemble cathode, mais seule est en activité celle de ces cathodes qui est soumise à un courant de chauffage. Les dispositifs de commutation connus comportent généralement un relais électromécanique permettant le choix ou bien deux transformateurs différents, la commutation se faisant alors du côté des enroulements primaires.

Les cathodes étant polarisées, par rapport à la masse de l'appareil, par une tension voisine de plusieurs dizaines de milliers de volts, l'isolement de ce relais est délicat. Les problèmes de claquage pouvant survenir entre son armature et ses bornes sont difficiles à résoudre. Leur défaut d'isolement présente un risque grave. Par ailleurs, il est fréquent de mettre en oeuvre des générateurs de signaux électriques différents pour assurer le chauffage de chacune des deux cathodes.

L'invention a pour objet de remédier aux inconvénients cités en proposant un procédé de commutation original ne mettant pas en oeuvre de contacteur électromécanique et ayant recours à un seul générateur de signaux électriques et à un seul transformateur.

L'invention concerne un procédé de commutation de l'alimentation électrique entre deux circuits de charge indépendants caractérisé en ce qu'on alimente les deux circuits de charge respectivement par les produits de redressement de chacune des alternances d'un signal alternatif et en ce que l'on règle le rapport cyclique de ce signal. L'invention concerne également un circuit électronique comprenant un générateur de signal alternatif pour alimenter électriquemenmt deux circuits de charge indépendants caractérisé en ce qu'il comporte des premiers moyens de redressement pour redresser une alternance du signal de signe donné et des deuxièmes moyens de redressement pour redresser l'autre alternance du signal de signe opposé à la première, lesdits moyens étant connectés pour alimenter respectivement les deux circuits de charge indépendants et en ce que le générateur est un générateur d'impulsions dont le rapport cyclique des impulsions est réglable.

L'invention sera mieux comprise et d'autres caractéristiques et avantages de celle-ci apparaîtrons au cours de la description non limitative qui suit. Cette description est faite en référence aux dessins annexés dans lesquels les mêmes repères désignent les mêmes éléments. Ces dessins comprennent:

Figure 1 un ensemble de moyens nécessaire à la mise en oeuvre du procédé de l'invention,

Figure 2A, Figure 2B, des diagrammes temporels de signaux électriques intervenant dans le pdocédé de l'invention.

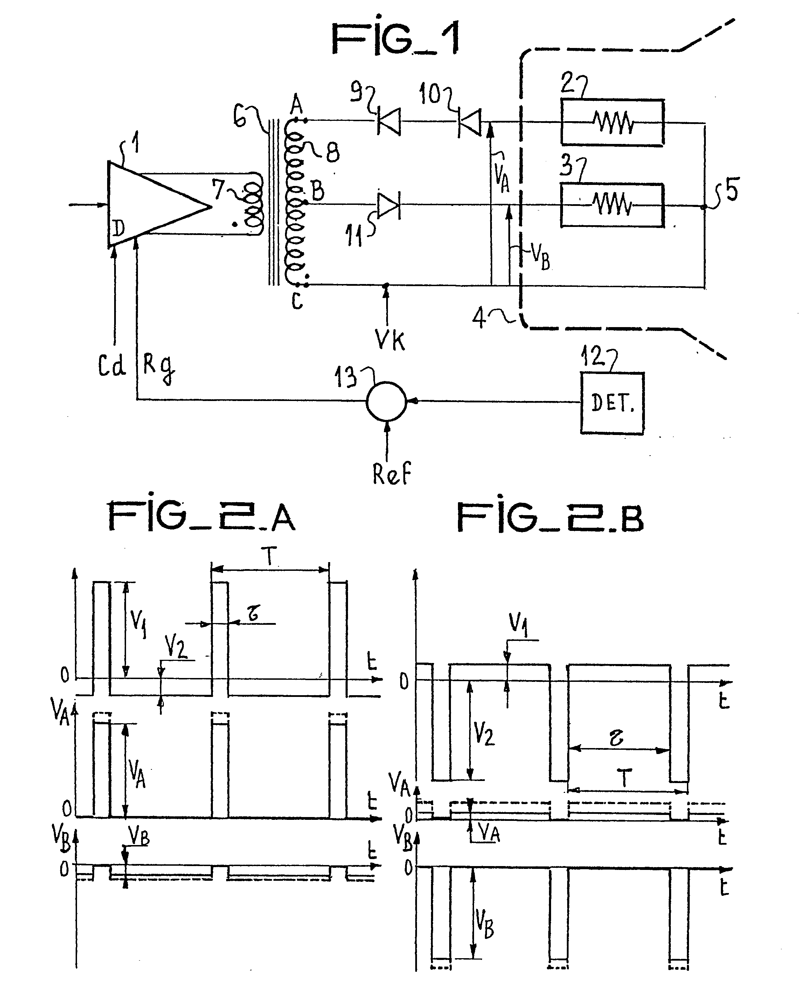

La figure 1 représente un circuit électronique comprenant un générateur de signal alternatif 1 relié à des moyens de redressement pour alimenter électriquement deux charges 2 et 3 symbolisées sous forme de résistances électriques. Conformément à l'application proposée cette figure indique que ces charges représentent les cathodes d'un tube 4 à rayon X. Sur cette figure les charges sont indépendantes puisque leurs bornes ne sont pas reliées ensemble. L'existence d'une borne commune 5 est relative aux contraintes de construction des tubes à rayons X évoquées plus haut. On expliquera plus loin que cette borne commune 5 n'est pas indispensable au fonctionnement du procédé de l'invention et qu'en particulier les charges 2 et 3 peuvent alors être complètement différenciées.

Les moyens de redressement du signal alternatif délivré par le générateur 1 comportent un transformateur 6 et deux circuits de diodes. Le générateur 1 est relié à l'enroulement primaire 7 du transformateur 6, les deux circuits de diodes sont reliés dans l'exemple en deux points distincts de l'enroulement secondaire 8 de ce transformateur: les points A et B. L'enroulement secondaire 8 peut avoir un nombre de spires ou une structure différente de l'enroulement 7 pour provoquer éventuellement une élévation et/ou un abaissement de la tension produite par le générateur 1. Un premier circuit de diodes en série est connecté entre le point A et la charge 2, le deuxième circuit de diodes est connecté entre le point B et la charge 3. Les formes d'onde des signaux électriques délivrés entre les bornes A et C de ce transformateur sont les mêmes que celles délivrés entre les bornes B et C. Ce faisant, le fait d'inverser les polarités des circuits de diodes permet de ne redresser dans chacun de ces circuits de diodes qu'une seule des deux alternances du signal alternatif du générateur. Les alternances redressées par chacun de ces circuits de diodes sont, bien entendu, différentes l'une de l'autre.

On considère que le premier circuit de diodes, comprenant les diodes 9 et 10 redresse l'alternance positive du signal puisque les cathodes de ces diodes sont situées du côté de la charge 2 et leurs anodes du côté du point A. On remarque que le deuxième circuit de diodes comprenant la diode 11 redresse l'alternance négative du signal puisque la cathode de sa diode est située du côté du point B et son anode du côté de la charge 3. Si l'on adopte une autre réalisation de l'enroulement secondaire 8 du transformateur 6, il est évidemment toujours possible d'orienter les diodes du premier circuit de diodes dans une polarité donnée et les diodes du deuxième circuit de diodes dans une polarité complémentaire de la précédente pour permettre le redressement respectivement de l'une et l'autre alternance. Par ailleurs, dans le cas où les charges sont indépendantes, notamment du point de vue de leur polarisation, leur indépendance est assurée en réalisant deux parties indépendantes électriquement dans l'enroulement secondaire du transformateurs 6.

Il est tout à fait possible que les prises A et B de l'enroulement secondaire 8 soient confondues en un seul point. On verra par la suite comment la modification du rapport cyclique permet même dans cette configuration d'effectuer la commutation de l'alimentation électrique entre la charge 2 et la charge 3. L'existence du transformateur 6 n'est alors plus justifiée que par l'application d'une tension de polarisation de cathode VK sur le brin commun des charges 2 et 3 représentant des cathodes d'un tube à rayons X dans l'exemple évoqué. Le transformateur 6 permet alors l'isolement du générateur 1 à l'égard de cette tension de polarisation. En dehors de cet exemple, il est possible de se passer du transformateur 6 et de connecter en parallèle les deux circuits de diodes sur l'une des bornes du générateur.

Les figures 2A et 2B représentent les formes d'ondes d'un signal alternatif impulsionnel mesuré en différents point du circuit électronique de l'invention. Ces signaux impulsionnels ont ici une forme rectangulaire ce qui rend plus compréhensible la notion de rapport cyclique. Cette forme rectangulaire des signaux n'est cependant pas une condition indispensable de fonctionnement du procédé de l'invention, notamment les flancs de ces impulsions peuvent être moins raides que ceux représentés sur les figure 2A et 2B. Le haut de ces figures représente un signal impulsionnel alternatif délivré par le générateur 1 et comportant une impulsion de durée $\tau$ se reproduisant périodiquement avec une période T. La composante continue de ce signal est nulle. Ceci revient à dire que le rapport des amplitudes V1/V2 respectivement des parties positives et négatives de ce signal est égal à:

$$\frac{V1}{V2} = \frac{T - \tau}{\tau}$$

Le bas de ces figures représente le signal delivré par le générateur 1 et ayant subi respectivement, signaux VA et VB, les redressements d'alternance imposés par les premiers et deuxième circuits de diodes. Ces signaux servent à alimenter respectivement les charges 2 et 3.

Les figures 2A et 2B sont complémentaires. La figure 2A représente des signaux dont le rapport cyclique est faible, ici de l'ordre de 10%, la figure 2B représente des signaux dont le rapport cyclique est fort, ici de l'ordre de 90%. On démontre par un calcul simple que lors du redressement de ces deux alternances, la valeur efficace des signaux redressés est proportionnelle à la racine carrée de l'énergie dissipée par chacune de ces deux alternances dans les charges, moyennée sur une période du signal. Le rapport de ces valeurs efficaces peut alors s'écrire en première approximation:

$$\frac{V1 \text{ Efficace}}{V2 \text{ Efficace}} = \sqrt{\frac{T - \tau}{\tau}}$$

Ainsi, lorsque le rapport cyclique $\dfrac{\tau}{T}$ est de l'ordre, par exemple, de 10% le rapport des tensions efficaces est de l'ordre de 3 et lorsque le rapporte cyclique est de l'ordre de 90% ce même rapport des valeurs de tension efficaces est voisin de 1/3. Ceci signifie que dans le cas de la figure 2A l'énergie dissipée dans la charge 2 est neuf fois plus importante que l'énergie dissipée dans la charge 3. Inversement, dans le cas de la figure 2B l'énergie dissipée dans la charge 3 est neuf fois plus importante que l'énergie dissipée dans la charge 2. Dans le cas d'une application de l'invention à un tube à rayons X ce rapport de 1 à 9 est suffisant pour faire la distinction entre un filament chaud et un filament froid. Un filament chaud est capable d'émettre des électrons alors qu'un filament froid n'est pas capable d'émettre des électrons. Le résultat de cette modification du rapport cyclique a ainsi pour effet d'opérer la sélection entre les filaments de cathode retenus pour l'utilisation désirée: utilisation en radioscopie ou en radiographie.

Le rapport des tensions efficaces n'est cependant pas directement représentatif de l'énergie dissipée dans les charges 2 et 3. L'explication qui vient d'être donnée est seulement relative à une configuration où les points A et B seraient confondus et où les charges 2 et 3 présenteraient une même valeur résistive. Dans cette hypothèse, la différence de thermoémissivité des filaments des cathodes devrait alors être obtenue en différenciant les matériaux thermoémissifs constituant ces filaments. Dans la pratique, les filaments sont fabriqués à partir d'un même matériau, en général à base de tungstène, et la différence de thermoémissivité des filaments est liée à leur importance: l'un est plus grand que l'autre. En conséquence, la résistance qu'ils présentent à l'égard du courant de chauffage est différente. C'est la raison pour laquelle les prises A et B ne sont pas confondues dans le transformateur 8. Ainsi la prise A, correspondant à un grand nombre de spires comprises entre le point C et le point A, délivre un signal alternatif dont l'amplitude est supérieure à celui délivré par la prise B. En conséquence, l'énergie dissipée dans la charge 2 avec un signal de rapport cyclique faible sera plus forte que l'énergie dissipée dans la charge 3 par un signal de rapport cyclique fort.

Pour un rapport cyclique donné, les rapports des énergies dissipées sont donc ainsi proportionnels d'une part aux rapports des tensions efficaces, et d'autre part au rapport des rapports de transformation opérés par le transformateur 6 entre les signaux délivrés au point A et au point B. Cependant, lorsque le rapport cyclique est fort (figure 2B), par exemple de l'ordre de 90%, cette différenciation des rapports de transformation du transformateur 6 vient neutraliser les effets de sélection obtenus par le rapport des valeurs efficaces. On remédie facilement à cette situation en interposant dans les circuits de diodes un certain nombre de diodes.

Ainsi, dans la figure 2A le signal référencé VA n'a pas comme amplitude la valeur V1 mais seulement comme amplitude la valeur V1 diminuée de la tension chutée dans les diodes 9 et 10 du premier circuit de diodes. Cette chute de tension est matérialisée par les contours en tirets. Comme dans cette figure le rapport cyclique est faible, la tension V1 est forte, et cette altération a peu d'importance. Par contre, dans la figure 2B, où la tension V1 est faible, cette altération est proportionnellement très sensible et on peut même, en choisissant le nombre de diodes du premier circuit de diodes, venir annuler complètement la tension VA de la figure 2B.

La charge 2 correspond aux grands filaments de cathodes utilisés en radiographie pour lequel la thermoémissivité doit être forte. La charge 3 représente un filament de cathode utilisé en radioscopie. Sa valeur résistive est plus faible que celle de la charge 2. Dans le cas de signaux à rapports cycliques faibles, (figure 2A), la tension VB n'est pas égale à la tension V2 mais est égale à cette tension V2 diminuée de la chute de tension opérée par la diode 11. L'annulation de cette tension VB est obtenue avec un nombre moins important de diodes dans le deuxième circuit de diodes qu'il n'y en avait dans le premier, puisque par ailleurs cette tension VB est obtenue avec un rapport de transformation inférieur à celui avec lequel était obtenue la tension VA. Avec un rapport cyclique plus fort, figure 2B, cette tension VB est peu altérée par la présence d'un nombre de diodes peu important.

On voit très bien qu'il est possible de cette manière de disposer un nombre de diodes suffisant dans chacun des deux circuits de diodes pour annuler, dans chacun des cas, celle des deux tensions qui n'est pas désirée. Dans un exemple, où le signal délivré par le générateur 1 a une variation de l'ordre de 10 volts, où le rapport de transformation du transformateur 6 est de 1 pour la prise A et est de 1/2 pour la prise B, et où les diodes sont dans la configuration représentée sur la figure 1, le signal VA et le signal VB en cas de rapport cyclique faible sont respectivement égaux à 7,6 volts et 0 volt; en cas de rapport cyclique fort ils sont respectivement pour valeur 0 volt et - 3,8 volts. Ces valeurs peuvent être rapidement retrouvées en considérant que les diodes sont des diodes au silicium et provoquent une chute de tension de l'ordre de 0,7 volt chacune. Partant de cet exemple chiffré on comprend donc qu'il est possible d'agir sur l'amplitude du signal délivré par le générateur 1, sur les rapports de transformation imposés par le transformateur, et sur le nombre de diodes contenues dans chacun des circuits de diodes pour adapter les puissances dissipées dans chacune des deux charges 2 et 3 en fonction des résistances de ces charges.

On a représenté symboliquement sur la figure 1 une entrée de commande D permettant de réaliser la commutation de l'alimentation des charges en agissant sur le rapport cyclique des impulsions produites par ce générateur 1. Il est possible de réguler la quantité d'énergie dissipée dans les charges en disposant une boucle de régulation comportant un détecteur 12 pour détecter une grandeur représentative de la qualité d'énergie dissipée dans la charge à réguler. Dans l'application de radioscopie ce détecteur 12 peut comprendre notamment les moyens pour mesurer la luminosité de l'image reçue sur un moniteur de télévision faisant partie de cette chaîne de radioscopie. Pratiquement, on mesure ainsi le niveau du signal vidéo alimentant ce moniteur puisque ce signal vidéo est proportionnel à la quantité de rayonnement X ayant traversé l'objet ou le patient et est donc proportionnel à l'intensité du courant de chauffage appliquée sur la cathode du tube 4 utilisée pour l'émission. Le signal délivré par le détecteur 12 est appliqué sur une des entrées d'un comparateur 13 recevant par ailleurs sur son autre entrée un signal de référence Ref. Ce comparateur élabore alors en correction un signal d'erreur Rg. Ce signal Rg est appliqué en parallèle avec un signa de commande Cd sur l'entrée de commande D du générateur de signal 1. En radiographie, la chaîne de régulation aura la même allure que la chaîne de régulation de radioscopie, la grandeur de référence Ref étant connue par expérience et tenant compte à la fois de la sensibilité des plaques photographiques utilisées et de l'irradiation maximum admissible pour les patients.

De nombreuses réalisations de générateur de signal à rapport cyclique réglable existent actuellement. Dans la pratique ces générateurs comportent un générateur de dents de scie dont la période des dents de scie est T. En comparant la valeur du signal en dents de scie à une valeur de commande Cd dans un comparateur on peut exploiter le signal de sortie de ce comparateur pour produire les impulsions évoquées. La tension de régulation Rg peut alors simplement être superposée à la tension de commande CD pour modifier le rapport cyclique de l'impulsion autour de sa valeur de réglage initial.

Le procédé décrit et le circuit électronique le mettant en oeuvre peuvent être appliqués avec de multiples variantes. Certaines de ces variantes ont été décrites et concernent notamment la forme des impulsions, la présence d'un transformateur, et la forme des circuits de diodes de redressement, cependant d'autres sont encore envisageables qui seraient caractérisées principalement en ce qu'elles mettent en oeuvre la modification du rapport cyclique pour effectuer la commutation. Il est d'ailleurs à remarquer que l'application du procédé est encore possible quand il s'agit seulement d'effectuer une balance entre les énergies dissipées dans deux charges électriques.

## Revendications

1. Procédé de commutation de l'alimentation électrique entre deux circuits (2, 3) de charge indépendants caractérisé en ce qu'on alimente les deux circuits de charge respectivement par les produits (VA, VB) de redressement de chacune des alternances d'un signal alternatif de valeur moyenne nulle et en ce qu'on règle le rapport cyclique $\tau/T$ de ce signal, $\tau$ étant la durée de l'alternance positive et T la période du signal.

2. Circuit électronique comprenant un générateur (1) de signal alternatif pour alimenter électriquement deux circuits (2, 3) de charge indépendants selon la revendication 1 caractérisé en ce qu'il comporte des premiers moyens (A, 9, 10) de redressement pour redresser une alternance du signal d'un signe donné et des deuxièmes moyens (B, 11) de redressement pour redresser l'autre alternance du signal de signe opposé à la première, lesdits moyens étant connectés pour alimenter respectivement les deux circuits de charge indépendants et en ce que le générateur est un générateur d'impulsion de valeur moyenne nulle dont le rapport cyclique ($\tau/T$) des impulsions est réglable.

3. Circuit selon la revendication 2 caractérisé en ce que les circuits de charge indépendants contiennent des filaments de chauffage indépendants d'un même tube (4) à rayons X.

4. Circuit selon l'une quelconque des revendications 2 à 3 caractérisé en ce que les premiers moyens comportent un premier enroulement (A, C) secondaire d'un transformateur (6) connecté en série avec au moins une première diode (9) dans une polarité donnée pour redresser une alternance (VA) du signal et en ce que les deuxièmes moyens comportent un deuxième enroulement (B, C) secondaire de ce transformateur connecté en série au moins une deuxième diode (11) dans une polarité complémentaire pour redresser l'autre alternance (VB) du signal.

5. Circuit selon la revendication 4 caractérisé en ce que le premier enroulement secondaire du transformateur est connecté en série avec deux diodes (9, 10).

6. Circuit selon l'une quelconque des revendications 4 et 5 caractérisé en ce que le deuxième enroulement secondaire du transformateur est inclus dans le premier enroulement secondaire.

7. Circuit selon l'une quelconque des revendications 4 à 6 caractérisé en ce que le deuxième enroulement secondaire est confondu avec le premier enroulement secondaire.

8. Circuit selon l'une quelconque des revendications 4 à 7 caractérisé en ce que le générateur de signal alternatif est relié à l'enroulement primaire (7) du transformateur (6).

9. Circuit selon l'une quelconque des revendications 2 à 8 caractérisé en ce qu'il comporte une boucle de régulation (12, 13) connectée à une commande (D) de réglage du rapport cyclique du générateur (1) et recevant un signal représentatif de la quantité d'énergie dissipée par la charge à réguler.

10. Utilisation du procédé selon la revendication 1 caractérisée en ce qu'elle se fait dans un tube à rayon X.

## Patentansprüche

1. Schaltverfahren für die elektrische Stromversorgung, zum Schalten zwischen zwei voneinander unabhängigen Lastkreisen (2, 3), dadurch gekennzeichnet, dass man die beiden Lastkreise je durch Gleichrichtungsprodukte (VA, VB) einer Polarität eines gleichstromfreien Wechselstromsignals speist und das zyklische Verhältnis $\tau/T$ dieses Signals regelt, wobei $\tau$ die Dauer der positiven Teilwelle und T die Signalperiode ist.

2. Elektronischer Kreis mit einem Wechselstromsignalgenerator (1) zur elektrischen Speisung von zwei unabhängigen Lastkreisen (2, 3) nach Anspruch 1, dadurch gekennzeichnet, dass er erste Gleichrichtermittel (A, 9, 10) zur Gleichrichtung einer gegebenen Polarität des Signals und zweite Gleichrichtermittel (B, 11) zur Gleichrichtung der anderen entgegengesetzten Polarität des Signals aufweist, wobei diese Mittel so verbunden sind, dass sie je einen der beiden unabhängigen Lastkreise speisen, und dass der Generator eine gleichstromfreie Impulsfolge liefert, deren zyklisches Schaltverhältnis ($\tau/T$) einstellbar ist.

3. Kreis nach Anspruch 2, dadurch gekennzeichnet, dass die unabhängigen Lastkreise unabhängige Heizwicklungen einer gemeinsamen Röntgenröhre (4) enthalten.

4. Kreis nach einem beliebigen der Ansprüche 2 bis 3, dadurch gekennzeichnet, dass die ersten Mittel eine erste Sekundärwicklung (A, C) eines Transformators (6) aufweisen, der in Reihe mit mindestens einer ersten Diode (9) einer gegebenen Leitrichtung angeschlossen ist, um eine Polarität (VA) des Signals gleichzurichten, und dass die zweiten Mittel eine zweite Sekundärwicklung (B, C) dieses Transformators aufweisen, die in Reihe mit mindestens einer zweiten Diode (11) entgegengesetzter Leitrichtung verbunden ist, um die andere Polarität (VB) des Signals gleichzurichten.

5. Kreis nach Anspruch 4, dadurch gekennzeichnet, dass die erste Sekundärwicklung des Transformators in Reihe mit zwei Dioden (9, 10) angeschlossen ist.

6. Kreis nach einem beliebigen der Ansprüche 4 und 5, dadurch gekennzeichnet, dass die zweite Sekundärwicklung des Transformators Bestandteil der ersten Sekundärwicklung ist.

7. Kreis nach einem beliebigen der Ansprüche 4 bis 6, dadurch gekennzeichnet, dass die zweite Sekundärwicklung und die erste Sekundärwicklung ein und dieselbe Wicklung sind.

8. Kreis nach einem beliebigen der Ansprüche 4 bis 7, dadurch gekennzeichnet, dass der Wechselstromsignalgenerator an die Primärwicklung (7) des Transformators (6) angeschlossen ist.

9. Kreis nach einem beliebigen der Ansprüche 2 bis 8, dadurch gekennzeichnet, dass er eine Regelschleife (12, 13) aufweist, die an einen Stelleingang (D) für die Regelung des zyklischen Verhältnisses des Generators (1) angeschlossen ist und ein für die Verlustenergiemenge der zu regelnden Last repräsentatives Signal empfängt.

10. Verwendung des Verfahrens nach Anspruch 1, dadurch gekennzeichnet, dass sie in einer Röntgenröhre erfolgt.

**Claims**

1. A method for switching the electric current supply between two independent load circuits (2, 3), characterized in that the two load circuits are supplied respectively with the products of rectification (VA, VB) of one of the polarities of an AC signal which is free of a DC component, and that the cyclic ratio $\tau/T$ of this signal is adjusted, $\tau$ being the duration of the positive polarity and T the signal period.

2. An electronic circuit comprising an AC signal generator for electrically feeding two independent load circuits (2, 3) according to claim 1, characterized in that it comprises first rectifier means (A, 9, 10) for rectifying one given polarity of the signal, and second rectifier means (B, 11) for rectifying the other polarity of the signal, these means being connected for feeding respectively the two independent load circuits, and that the generator furnishes a pulse sequence without DC component, the cyclic ratio ($\tau/T$) of the pulses being adjustable.

3. A circuit according to claim 2, characterized in that the independent load circuits include independent heating filaments of a common X-ray tube (4).

4. A circuit according to any one of claims 2 and 3, characterized in that the first means comprise a first secondary winding (A, C) of a transformer (6) connected in series with at least one first diode (9) according to a given polarity for rectifying one polarity (VA) of the signal, and that the second means comprise a secondary winding (B, C) of this transformer connected in series with at least one second diode (11) according to a complementary polarity for rectifying the other polarity (VB) of the signal.

5. A circuit according to claim 4, characterized in that the first secondary winding of the transformer is connected in series with two diodes (9, 10).

6. A circuit according to any one of claims 4 and 5, characterized in that the second secondary winding of the transformer is included in the first secondary winding.

7. A circuit according to any one of claims 4 to 6, characterized in that the second secondary winding is identical with the first secondary winding.

8. A circuit according to any one of claims 4 to 7, characterized in that the AC signal generator is applied to the primary winding (7) of the transformer (6).

9. A circuit according to any one of claims 2 to 8, characterized in that it comprises a control loop (12, 13) connected to a control input (D) for adjusting the cyclical ratio of the generator (1) and receiving a signal which is representative of the quantity of energy dissipated in the load to be controlled.

10. The use of the method according to claim 1, characterized in that it is made in an X-ray tube.

# FIG_1

# FIG_2.A

# FIG_2.B